# FASCICULE DE BREVET EUROPEEN

(11) **EP 0 637 702 B1**
(45) Date de publication et mention de la délivrance du brevet: **26.11.1997**
(21) Numéro de dépôt: 94401806.8
(22) Date de dépôt: 04.08.1994
(51) Int. Cl.: F16F 9/36

(54) **Dispositif d'obturation à guide lubrifié pour tube d'amortisseur hydraulique pressurisé**
Abdichtungsvorrichtung durch eine geschmierte Führung für hydraulische Druckstossdämpfer
Sealing apparatus by means of a lubricated guide for pressurized tube type hydraulic shock absorbers

(30) Priorité: 06.08.1993 FR 9309742
(43) Date de publication de la demande: 08.02.1995
(73) Titulaire: SOCIETE FRANCAISE DES AMORTISSEURS DE CARBON, F-27430 Saint Pierre du Vauvray (FR)
(72) Inventeur: Bataille, Alain, F-75015 Paris (FR)
(74) Mandataire: Casalonga, Axel

(56) Documents cités:
- EP-A- 0 535 409
- DE-A- 2 905 928
- DE-B- 1 275 367
- DE-U- 7 708 863

## Description

La présente invention concerne un dispositif d'obturation pour un tube d'amortisseur hydraulique pressurisé, notamment de type monotube.

Les amortisseurs hydrauliques sont couramment utilisés pour équiper des véhicules, en particulier des véhicules automobiles. Un amortisseur hydraulique pressurisé comprend en général un piston apte à coulisser à l'intérieur d'un tube en définissant deux chambres de part et d'autre du piston et remplies d'un liquide. Le piston présente un passage traversant qui met en communication les deux chambres en coopérant avec un clapet flottant, lequel régule l'ouverture du passage en fonction du sens d'écoulement du liquide dans le passage. Cet écoulement est provoqué par le mouvement axial du piston dans le tube lors du fonctionnement de l'amortisseur en phase d'extension ou de compression. Le piston est habituellement fixé à une extrémité d'une tige dont le déplacement dans le tube est guidé axialement par un dispositif d'obturation monté à une partie d'extrémité du tube.

Les dispositifs d'obturation ont pour fonction d'une part d'obturer de façon étanche une partie d'extrémité du tube de l'amortisseur, et d'autre part de guider axialement le mouvement de la tige et donc du piston à l'intérieur du tube de l'amortisseur. Généralement, un dispositif d'obturation comprend un bouchon guide, au moins un joint d'étanchéité, un élément de butée de détente et des moyens de fixation de l'ensemble dans le tube, le ou les joints d'étanchéité étant pris en sandwich entre le bouchon guide et l'élément de butée de détente.

Comme son nom l'indique, le bouchon guide assure le guidage axial de la tige du piston dans le tube de l'amortisseur. Le joint d'étanchéité assure aussi bien l'étanchéité entre le bouchon guide et le tube, que l'étanchéité entre le bouchon guide et la tige. Il en résulte que le bouchon guide n'est pratiquement pas en contact avec le liquide de l'amortisseur, constitué généralement d'une huile incompressible. En conséquence, le guidage de la tige par le bouchon guide n'est pas lubrifié par l'huile de l'amortisseur. Etant donné que le bouchon guide et la tige sont réalisés en matériaux métalliques, il se produit une friction entre ces deux pièces lors du fonctionnement de l'amortisseur. Cette friction provoque d'une part un échauffement thermique de la tige et du bouchon guide accélérant le vieillissement du joint d'étanchéité adjacent, et d'autre part l'usure entre la tige et le bouchon guide. Le vieillissement du joint d'étanchéité provoqué par l'échauffement thermique raccourcit considérablement la durée de vie du joint. L'usure entre la tige et le bouchon guide augmente le jeu radial entre ces deux pièces et réduit donc la précision de guidage du mouvement axial du piston dans le tube de l'amortisseur.

En outre, le jeu radial nécessaire entre la tige et le bouchon guide et l'absence de lubrification des surfaces de guidage provoquent des bruits dûs aux chocs entre la tige et le bouchon guide lors du fonctionnement de l'amortisseur. En effet, les contraintes soumises à l'amortisseur ne sont pas strictement axiales. Les composantes radiales de ces contraintes provoquent d'abord un choc mécanique entre la tige et le bouchon guide, choc qui sera suivi de vibrations de la tige et cause un effet sonore de grésillement dû à l'interférence entre la tige et le bouchon guide lorsque l'amplitude des vibrations de la tige est supérieure ou égale au jeu radial existant entre la tige et le bouchon guide. Les bruits ainsi provoqués constituent une nuisance pour l'utilisateur.

La présente invention a pour objet de résoudre l'ensemble des problèmes évoqués ci-dessus en proposant un dispositif d'obturation de structure simple et efficace.

Selon l'invention, on crée un guidage lubrifié de la tige du piston à l'aide d'un guide, et on supprime la fonction de guidage de la tige par le bouchon en laissant un jeu radial suffisant entre le bouchon et la tige le traversant.

Le dispositif d'obturation selon l'invention est destiné à être monté dans un tube d'amortisseur hydraulique pressurisé dans lequel coulisse un piston pourvu d'une tige axiale. Le dispositif d'obturation comprend un bouchon, au moins un joint d'étanchéité, une pièce de butée de détente et des moyens de fixation de l'ensemble dans le tube, le dispositif d'obturation entourant la tige de l'amortisseur au voisinage de l'extrémité supérieure du tube.

Selon l'invention, l'élément de butée de détente est réalisé sous forme d'un disque de guidage pour guider axialement la tige du piston, le disque étant pourvu d'un ou plusieurs perforations réparties sur un trajet circulaire concentrique à la tige. Les perforations du disque permettent une communication permanente entre l'huile de l'amortisseur et un volume de détente pour l'huile entre le joint d'étanchéité et le disque de guidage. Le volume de détente peut être défini par une gorge annulaire pratiquée sur un côté du disque, le fond de la gorge communiquant avec lesdites perforations, ou par une gorge annulaire pratiquée sur le joint d'étanchéité en regard des perforations du disque, ou encore par une surface inclinée du disque ou du joint d'étanchéité.

Le bouchon présente une ouverture centrale circulaire permettant le passage de la tige avec un jeu radial. Le joint d'étanchéité est pris en sandwich entre le bouchon et le guide sous forme de disque, le volume de détente étant défini par deux couronnes concentriques d'appui axial entre je joint d'étanchéité et le disque de guidage.

L'invention sera mieux comprise à l'étude de la description détaillée de quelques modes de réalisation pris à titre nullement limitatif et illustrés par les dessins annexés, sur lesquels :
la figure 1 est une coupe axiale schématique d'un amortisseur hydraulique pressurisé monotube classique,
la figure 2 est une vue partielle de la figure 1 avec l'amortisseur équipé du dispositif d'obturation selon un premier mode de réalisation de l'invention,
la figure 3 est une vue similaire à la figure 2 représentant un second mode de réalisation de l'invention,
la figure 4 est une vue similaire à la figure 2 représentant un troisième mode de réalisation de l'invention,
la figure 5 est une vue similaire à la figure 4 représentant un quatrième mode de réalisation de l'invention,
la figure 6 est une vue en plan d'un composant du dispositif de l'invention selon les figures 2 à 5,
la figure 7 est une vue similaire à la figure 2 représentant un cinquième mode de réalisation de l'invention, et
la figure 8 est une vue similaire à la figure 7 représentant un sixième mode de réalisation de l'invention.

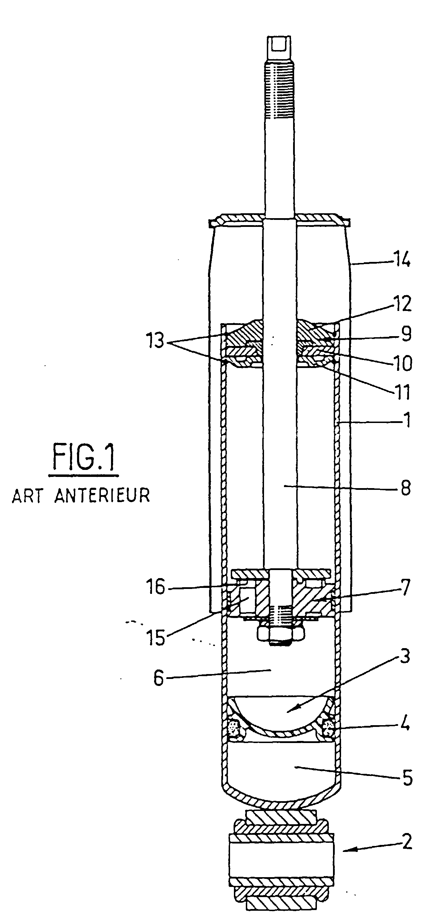

Comme illustré sur la figure 1, l'amortisseur hydraulique pressurisé monotube comprend un tube 1 fixé à son extrémité inférieure par un oeillet 2. Un piston séparateur gaz/liquide 3, monté libre à coulissement dans la partie inférieure du tube 1, est muni d'un joint torique d'étanchéité 4 et sépare le tube en deux compartiments fermés. Le compartiment inférieur 5 contient un gaz sous pression et le compartiment supérieur 6 est rempli d'un liquide qui est en général une huile incompressible. Un second piston 7 est fixé à l'extrémité inférieure d'une tige 8 dont le déplacement dans le tube 1 est guidé par un dispositif d'obturation 9 fixé à la partie supérieure du tube 1. L'extrémité supérieure de la tige 8 du piston 7 est rendue solidaire d'un goujon de fixation. L'amortisseur peut être complété par un protecteur 14 sous forme générale tubulaire rendue solidaire de la partie supérieure de la tige 8 et venant coiffer par dessus la partie supérieure du tube 1. Pour assurer le fonctionnement de l'amortisseur, le piston 7 présente des passages permanents 15 pour l'huile de l'amortisseur. Les passages 15 coopèrent avec un clapet flottant 16 pour définir de part et d'autre du piston 7 deux chambres hydrauliquement actives.

Le dispositif d'obturation 9, dans sa conception classique, comprend un joint d'étanchéité 10, un élément de butée de détente 11 réalisé à partir d'un flasque métallique et un bouchon guide 12 contre la face interne duquel est appliqué le joint d'étanchéité 10 plaqué par la pression d'huile et maintenu en place par l'élément de butée de détente 11. L'ensemble est fixé à l'intérieur du tube 1 à sa partie supérieure par deux circlips 13. Le guidage axial de la tige 8 du piston 7 est réalisé à l'aide du bouchon guide 12. L'élément de butée de détente 11 présente une ouverture centrale qui laisse traverser la tige 8 avec jeu radial et assure le maintien du joint d'étanchéité 10. Le joint d'étanchéité 10 est constitué de deux parties complémentaires : une première partie en rondelle dite statique assurant l'étanchéité entre le bouchon guide 12 et la paroi interne du tube 1, une seconde partie dite dynamique qui entoure la tige 8 par déformation élastique afin d'assurer l'étanchéité entre le bouchon guide 12 et la tige 8 du piston 7. Le joint d'étanchéité 10 est réalisé à partir d'un ou de deux élastomères différents.

Etant donné que le joint d'étanchéité 10 empêche l'huile de l'amortisseur de pénétrer dans les surfaces de contact entre les bouchon guide 12 et la tige 8, il n'existe pratiquement pas de lubrification sur ces surfaces de contact. Le fonctionnement répété de l'amortisseur entraîne alors l'usure par friction des surfaces de contact entre la tige 8 métallique et le bouchon guide 12 également métallique. La friction peut provoquer un échauffement thermique local qui détériore la partie dynamique du joint d'étanchéité 10 en élastomère. De plus, lorsque l'amortisseur subit des contraintes non strictement axiales, il se produit un choc entre le bouchon guide 12 et la tige 8 en flexion, ce qui peut causer des bruits, sources de gêne au conducteur de véhicule équipé de l'amortisseur.

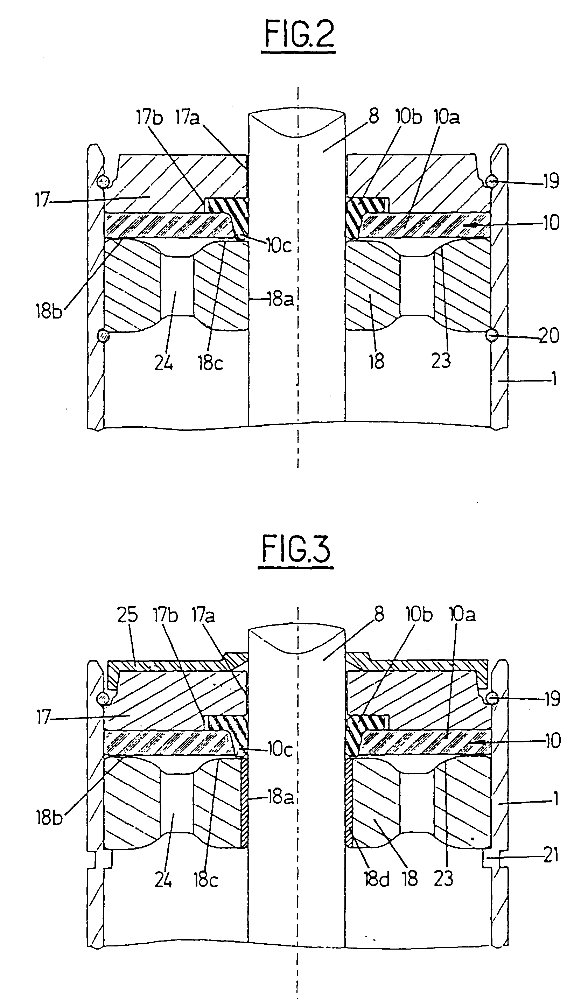

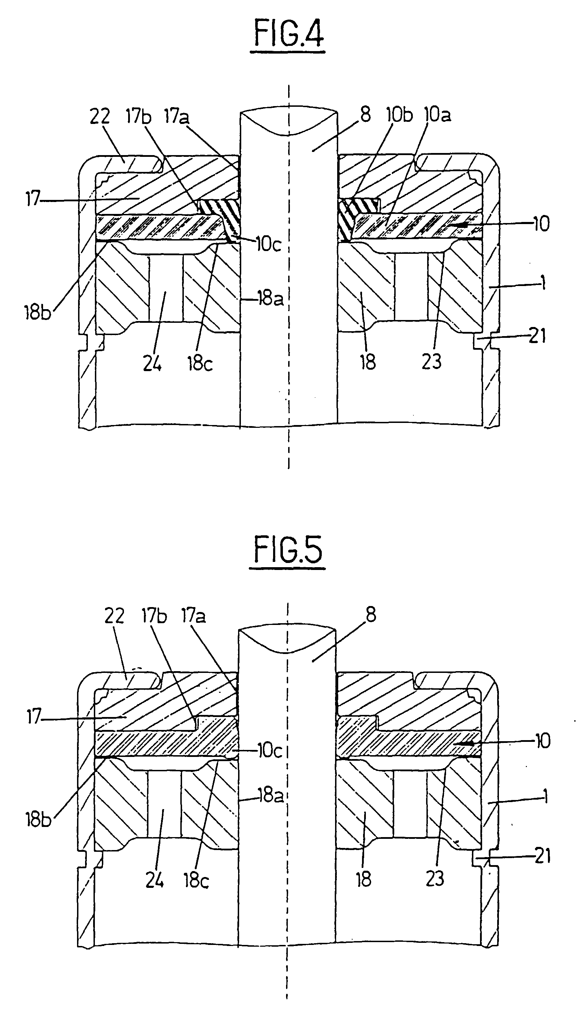

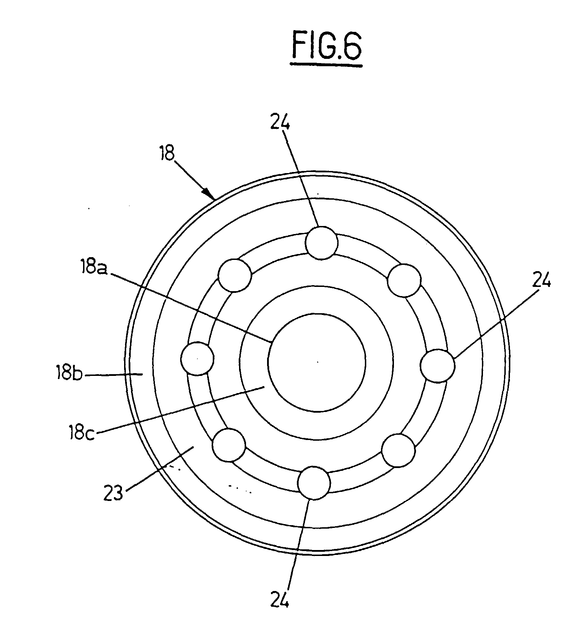

Comme illustré sur les figures 2 à 6, le dispositif d'obturation selon l'invention comprend un joint d'étanchéité 10 en une seule partie (figure 5) ou en deux parties assemblées concentriques (figures 2 à 4) : la partie statique 10a sous forme d'une rondelle et la partie dynamique 10b également annulaire. La partie dynamique 10b du joint est forcée en expansion radiale par la tige 8 du piston 7 la traversant et joue un rôle de racleur d'huile autour de la tige 8. La partie statique 10a du joint présente son pourtour extérieur en contact avec la paroi interne du tube 1 de l'amortisseur. Le dispositif d'obturation comprend en outre un bouchon 17 annulaire dont le diamètre extérieur est sensiblement identique au diamètre intérieur du tube 1 de l'amortisseur et dont le diamètre intérieur est supérieur au diamètre de la tige 8 du piston, de façon à présenter un jeu radial évitant le contact direct entre le bouchon 17 et la tige 8 pendant le fonctionnement de l'amortisseur. Un guide lubrifié 18 sous forme d'un disque annulaire, dont le diamètre extérieur est sensiblement identique au diamètre intérieur du tube 1 de l'amortisseur et dont le diamètre intérieur est très légèrement supérieur au diamètre de la tige 8 du piston, de façon à pouvoir guider le mouvement axial du piston 8. Le bouchon 17 et le guide lubrifié 18 prend en sandwich le joint d'étanchéité 10 autour de la tige 8 à l'intérieur de la partie d'extrémité supérieure du tube 1 de l'amortisseur. La fixation axiale de cet ensemble dans le tube 1 peut être effectuée à l'aide de deux circlips 19 et 20 constituant des butées axiales respectivement pour le bouchon 17 et pour le guide lubrifié 18 (figure 2), un circlips 19 associé au bouchon 17 et des déformations 21 par étranglement radial du tube 1 pour constituer une butée axiale au guide lubrifié 18 (figure 3) ou un sertissage 22 de l'extrémité supérieure du tube 1 sur le bouchon 17 et une déformation 21 par étranglement radial du tube 1 pour constituer une butée axiale au guide lubrifié 18 (figures 4 et 5) .

En se référant plus particulièrement à la figure 6, on peut décrire la structure du guide lubrifié 18 selon l'invention. Le guide lubrifié 18 annulaire présente au moins une face pourvue d'une gorge annulaire 23 concentrique à l'ouverture centrale 18a qui est destinée au guidage axial de la tige 8 du piston. La gorge annulaire 23 présente une section sensiblement trapézoïdale ou en V évasée vers son ouverture. Au fond de la gorge annulaire 23 débouchent plusieurs perforations 24 axiales traversant le guide 18 et réparties de façon régulière le long de la gorge annulaire 23. Le guide 18 peut présenter deux faces identiques, comme illustré sur les figures 2 à 5, afin de faciliter le montage du dispositif d'obturation de l'invention.

Dans la pratique, le diamètre de l'ouverture centrale 18a du guide lubrifié 18 est supérieure au diamètre de la tige 8 du piston de quelques centièmes de millimètre, de préférence en dessous d'un dixième de millimètre de façon à permettre un bon guidage du mouvement de la tige 8. Cette différence de diamètre est suffisante pour permettre la présence permanente d'un film d'huile entre le guide 18 et la tige 8, puisque le guide 18 est entièrement baigné dans l'huile de l'amortisseur, et que les surfaces de guidage entre le guide 18 et la tige 8 est constamment alimenté en huile d'une part par capillarité et d'autre part par le mouvement axial de la tige 8 qui ramène de l'huile dans cet espace de guidage. Le guide 18 est ainsi constamment lubrifié, ce qui a pour conséquence de réduire l'usure entre la tige 8 et le guide 18 et d'augmenter alors la durée de vie des pièces. Le film d'huile présent aux surfaces de guidage permet également de réduire l'échauffement thermique des pièces, notamment du guide 18 qui est baigné dans l'huile et refroidi par celle-ci.

Le joint d'étanchéité 10 est réalisé en élastomère, les parties statique 10a et dynamique 10b peuvent présenter des compositions chimiques différentes. Afin de permettre la déformation du joint d'étanchéité 10 autour de la tige 8, sur la face inférieure du bouchon 17 est pratiqué un logement annulaire 17b. Le diamètre de l'ouverture centrale 17a du bouchon 17 est supérieur au diamètre de la tige 8 de quelques dixièmes de millimètre, de préférence inférieur à 1 mm. Un jeu radial trop important entre le bouchon 17 et la tige 8 risque de tolérer une déformation élastique trop important au joint d'étanchéité 10, ce qui peut entraîner une fuite d'huile au travers du joint 10b autour de la tige 8, la pression d'huile de l'amortisseur pouvant en effet atteindre jusqu'à 250 bars pendant le fonctionnement de l'amortisseur.

Le joint d'étanchéité 10 est mécaniquement pris en sandwich entre le bouchon 17 et le guide 18 par deux surfaces concentriques 18b et 18c du guide 18 séparées radialement par la gorge annulaire 23 qui définit ainsi un volume de détente pour l'huile entre le joint d'étanchéité 10 et le guide 18. Le joint 10 est alors exposé à la pression d'huile sur une grande partie de sa surface inférieure, afin de permettre une bonne déformation de l'ensemble du joint pour assurer sa fonction d'étanchéité. Il est possible d'augmenter la surface du joint d'étanchéité 10 en contact permanent avec l'huile de l'amortisseur en rendant la surface annulaire intérieure 18c du guide 18 en retrait axialement par rapport à la surface annulaire extérieure 18b du guide 18, lesdites surfaces annulaires étant orientées face à la surface inférieure du joint d'étanchéité 10. Il est alors nécessaire de prévoir une couronne 10c en saillie axiale par rapport à la surface inférieure du joint d'étanchéité 10 et en appui axial sur la surface annulaire intérieure 18c en retrait du guide 18. Ainsi, le joint d'étanchéité 10 est mieux asservi par l'huile de l'amortisseur. La variation de la pression d'huile pendant le fonctionnement de l'amortisseur n'agit pas sur le guide lubrifié 18 dont les deux faces subit la même pression hydraulique grâce aux perforations 24.

D'une manière générale, la tige 8 est réalisée en acier chromé dure pour la rendre résistante à l'usure et à la corrosion. Le guide 18 peut être réalisé en fer fritté imprégné d'huile ou en fer fritté ayant subi un traitement du surface de durcissement à la vapeur d'eau, ou en aluminium anodisé dur.

Selon une variante de réalisation (figure 3), le guide lubrifié 18 peut être réalisé non pas en monobloc mais en deux parties composées : un corps 18 présentant un alésage central circulaire et un coussinet 18d tubulaire rapporté dans l'alésage central du corps de guide 18 et offrant une surface de frottement et de guidage à la tige 8 du piston. Le coussinet 18d peut présenter sur sa surface intérieure une couche en matière plastique connue sous le nom de TEFLON.

Afin d'éviter l'introduction de particules polluantes, de poussière ou de sable dans le jeu radial existant entre la tige 8 et le bouchon 17, le dispositif d'obturation de l'invention comprend de préférence des moyens de raclage autour de la tige 8 au dessus du bouchon 17. Parmi les solutions possibles, on peut prévoir un racleur annulaire 25 en matière plastique (figure 3) fixé sur la surface supérieure du bouchon 17 à l'aide par exemple d'un flasque annulaire non représenté. Le moyen de raclage 25 présente une lèvre circonférentielle intérieure en appui autour de la tige 8. Le moyen de raclage 25 peut évidemment être utilisé pour les autres modes de réalisation de l'invention.

Il importe de créer un volume de détente pour l'huile entre le guide 18 et le joint d'étanchéité 10 qui soit en équipression avec l'huile de l'amortisseur contenue dans le tube 1, afin d'éviter la surpression au niveau de la partie dynamique 10b du joint d'étanchéité pouvant provoquer une fuite de l'huile vers l'extérieur.

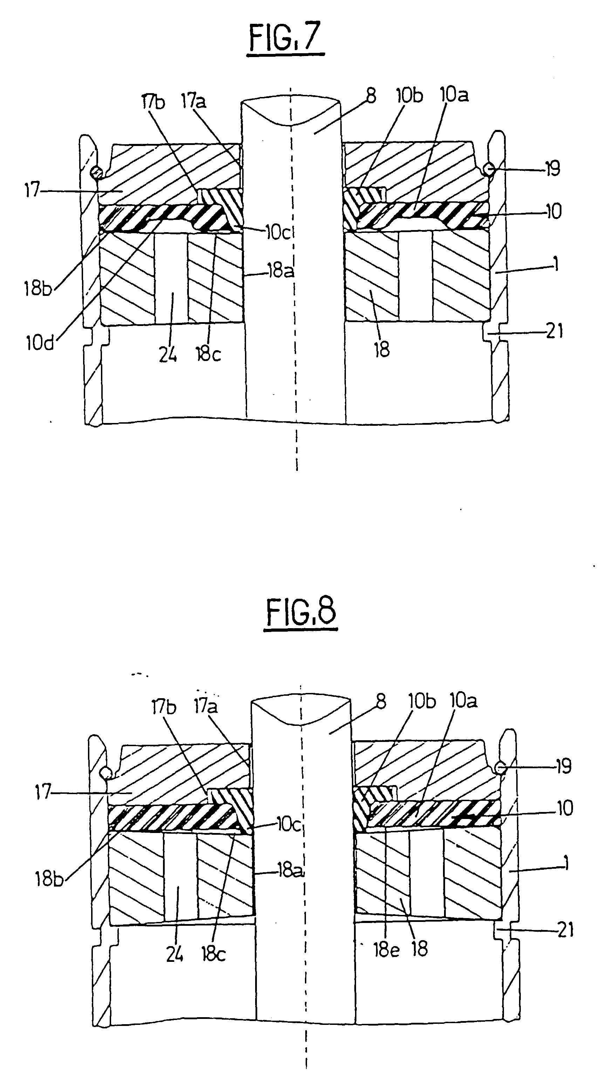

Les figures 7 et 8 montrent deux autres variantes de l'invention permettant de réaliser le volume de détente pour l'huile. Au lieu de prévoir une gorge annulaire 23 sur le guide lubrifié 18, il est possible de réaliser la partie statique 10a du joint d'étanchéité 10 avec une gorge annulaire 10d en regard axialement des perforations 24 du guide 18 (figure 7), ou de réaliser une surface légèrement conique 18e vers l'intérieur sur au moins un côté du guide 18 face au joint d'étanchéité 10 (figure 8). Les deux couronnes concentriques d'appui axial entre le joint d'étanchéité 10 et le guide 18 sont pratiquement les mêmes que les modes de réalisation de l'invention précédemment décrits.

## Revendications

1. Dispositif d'obturation d'un tube (1) d'amortisseur hydraulique pressurisé dans lequel coulisse un piston (7) pourvu d'une tige axiale (8), le dispositif comprenant un bouchon (17) un joint d'étanchéité (10), un élément de butée de détente (11, 18) et des moyens de fixation (19 à 22) du dispositif d'obturation dans le tube, caractérisé en ce que l'élément de butée de détente est réalisé sous forme d'un disque (18) dont l'ouverture centrale (18a) guide le mouvement axial de la tige (8), le disque de guidage présentant une ou plusieurs perforations (24) réparties sur un trajet circulaire pour assurer la communication du fluide de l'amortisseur entre un volume de détente et l'intérieur du tube, le volume de détente étant défini par le joint d'étanchéité et le disque entre deux couronnes concentriques (18b, 18c) d'appui axial, et que le bouchon (17) présente une ouverture centrale (17a) dont le diamètre est supérieur au diamètre de la tige du tube pour définir un jeu radial évitant le contact mécanique entre le bouchon et la tige pendant le fonctionnement de l'amortisseur, le bouchon présentant un logement circulaire (17b) autour de son ouverture centrale pour recevoir une partie du joint d'étanchéité pris en sandwich entre le bouchon et le disque de guidage.

2. Dispositif selon la revendication 1, caractérisé en ce que le disque de guidage (18) comporte une gorge annulaire (23) sur au moins un des côtés, les perforations (24) débouchant dans le fond de la gorge annulaire.

3. Dispositif selon la revendication 2, caractérisé en ce que la gorge annulaire (23) du disque de guidage (18) présente une section sensiblement trapézoïdale ou en V qui s'évase vers l'extérieur.

4. Dispositif selon la revendication 2 ou 3, caractérisé en ce que la surface annulaire intérieure (18c) du disque de guidage est en retrait axial par rapport à la surface annulaire extérieure (18b) du disque.

5. Dispositif selon la revendication 1, caractérisé en ce que le joint d'étanchéité (10) présente une gorge annulaire (10d) face axialement aux perforations (24) du disque de guidage.

6. Dispositif selon la revendication 1, caractérisé en ce que le disque de guidage (18) présente au moins un côté conique (18e) vers l'intérieur orienté face au joint d'étanchéité (10).

7. Dispositif selon l'une des revendications précédentes, caractérisé en ce que le disque de guidage (18) présente deux côtés identiques.

8. Dispositif selon l'une des revendications précédentes, caractérisé en ce que le joint d'étanchéité (10) est réalisé en une pièce unique en élastomère.

9. Dispositif selon l'une des revendications 1 à 7, caractérisé en ce que le joint d'étanchéité (10) est constitué d'une partie statique (10a) sous forme de rondelle assurant l'étanchéité entre le bouchon (17) et la paroi intérieure du tube (1) de l'amortisseur, et d'une partie dynamique (10b) centrée par rapport à la partie statique et assurant l'étanchéité entre le bouchon et la tige (8) du piston.

10. Dispositif selon l'une des revendications précédentes, caractérisé en ce que le diamètre de l'ouverture centrale (18a) du disque de guidage est supérieur au diamètre de la tige de quelques centièmes de millimètre à un dixième de millimètre.

11. Dispositif selon l'une des revendications précédentes, caractérisé en ce que le diamètre de l'ouverture centrale (17a) du bouchon est supérieur au diamètre de la tige de quelques dixièmes de millimètre.

12. Dispositif selon l'une des revendications précédentes, caractérisé en ce que le disque de guidage (18) comporte un alésage central dans lequel est monté un coussinet de guidage (18d) tubulaire.

13. Dispositif selon l'une des revendications précédentes, caractérisé en ce qu'il comprend en outre des moyens de raclage (25) protégeant le jeu radial entre le bouchon et la tige du milieu extérieur.

## Patentansprüche

1. Abdichtungsvorrichtung für das Rohr (1) eines hydraulischen Druckstoßdämpfers, in welchem ein mit einer axialen Stange (8) versehener Kolben (7) verschiebbar angeordnet ist, wobei die Vorrichtung eine Verschlußbuchse (17), einen Dichtring (10), ein Entlastungs-Anschlagelement (11, 18) und Befestigungsmittel (19 bis 22) für die Abdichtungsvorrichtung in dem Rohr umfaßt, dadurch gekennzeichnet, daß das Entlastungs-Anschlagelement in Form einer Scheibe (18) ausgebildet ist, deren Mittelöffnung (18a) die Axialbewegung der Stange (8) führt, wobei die Führungsscheibe eine oder mehrere auf einer Kreisbahn verteilte Durchbrüche (24) aufweist, um den Austausch der Dämpferflüssigkeit zwischen einem Entlastungsvolumen und dem Inneren des Rohres zu gewährleisten, wobei das Entlastungsvolumen durch den Dichtring und die Scheibe zwischen zwei konzentrischen Ansätzen (18b, 18c) zur Axialabstützung festgelegt ist, und daß die Verschlußbuchse (17) eine zentrale Öffnung (17a) aufweist, deren Durchmesser größer ist als der Durchmesser der Rohrstange, um ein Radialspiel festzulegen, welches den mechanischen Kontakt zwischen der Verschlußbuchse und der Stange während des Betriebs des Stoßdämpfers vermeidet, wobei die Verschlußbuchse eine kreisförmige Lagerbuchse (17b) um seine zentrale Öffnung herum aufweist, um einen Abschnitt des Dichtrings zwischen der Verschlußbuchse und der Führungsscheibe sandwichartig eingeklemmt zu umfassen.

2. Vorrichtung nach Anspruch 1, dadurch gekennzeichnet, daß die Führungsscheibe (18) eine ringförmige Einbuchtung (23) auf mindestens einer ihrer Seiten aufweist, wobei die Durchbrüche (24) auf dem Grund der ringförmigen Einbuchtung münden.

3. Vorrichtung nach Anspruch 2, dadurch gekennzeichnet, daß die ringförmige Einbuchtung (23) der Führungsscheibe (18) einen annähernd trapezförmigen oder V-förmigen Querschnitt aufweist, der sich nach außen erweitert.

4. Vorrichtung nach Anspruch 2 oder 3, dadurch gekennzeichnet, daß die innere Ringoberfläche (18c) der Führungsscheibe gegenüber der äußeren Ringoberfläche (18b) der Scheibe axial zurückgesetzt ist.

5. Vorrichtung nach Anspruch 1, dadurch gekennzeichnet, daß der Dichtring (10) eine ringförmige Einbuchtung (10d) aufweist, welche in Axialrichtung den Durchbrüchen (24) der Führungsscheibe gegenüberliegt.

6. Vorrichtung nach Anspruch 1, dadurch gekennzeichnet, daß die Führungsscheibe (18) mindestens eine nach innen zu konische, dem Dichtring (10) zugewandte Seite (18e) aufweist.

7. Vorrichtung nach einem der vorangehenden Ansprüche, dadurch gekennzeichnet, daß die Führungsscheibe (18) zwei identische Seiten aufweist.

8. Vorrichtung nach einem der vorangehenden Ansprüche, dadurch gekennzeichnet, daß der Dichtring (10) in einem Stück aus Elastomer besteht.

9. Vorrichtung nach einem der Ansprüche 1 bis 7, dadurch gekennzeichnet, daß der Dichtring (10) von einem statischen Teil (10) in Form einer Ringscheibe, welche die Dichtung zwischen der Verschlußbuchse (17) und der Innenwand des Rohres (1) des Stoßdämpfers gewährleistet, und von einem dynamischen Teil (10b), welcher gegenüber dem statischen Teil zentriert ist und die Dichtung zwischen der Verschlußbuchse und der Kolbenstange (8) gewährleistet, gebildet ist.

10. Vorrichtung nach einem der vorangehenden Ansprüche, dadurch gekennzeichnet, daß der Durchmesser der zentralen Öffnung (18a) der Führungsscheibe um einige Hundertstel Millimeter bis zu einem Zehntel Millimeter größer ist als der Durchmesser der Stange.

11. Vorrichtung nach einem der vorangehenden Ansprüche, dadurch gekennzeichnet, daß der Durchmesser der zentralen Öffnung (17a) der Verschlußbuchse um einige Zehntel Millimeter größer ist als der Durchmesser der Stange.

12. Vorrichtung nach einem der vorangehenden Ansprüche, dadurch gekennzeichnet, daß die Führungsscheibe (18) eine zentrale Bohrung aufweist, in der eine rohrförmige Führungsbuchse (18d) befestigt ist.

13. Vorrichtung nach einem der vorangehenden Ansprüche, dadurch gekennzeichnet, daß sie zusätzlich ein Abstreifelement (25) aufweist, welches das radiale Spiel zwischen der Verschlußbuchse und der Stange vom Außenbereich her schützt.

## Claims

1. Sealing device for a pressurized hydraulic shock-absorber tube (1) in which a piston (7) provided with an axial rod (8) slides, the device comprising a cap (17), a seal (10), an expansion stop element (11, 18) and means (19 to 22) for fixing the sealing device in the tube, characterized in that the expansion stop element is made in the form of a disc (18) whose central opening (18a) guides the axial movement of the rod (8), the guiding disc having one or more perforations (24) distributed around a circular path, in order to ensure communication of the shock-absorber fluid between an expansion volume and the inside of the tube, the expansion volume being defined by the seal and the disc between two concentric axial-bearing rings (18b, 18c), and in that the cap (17) has a central opening (17a) whose diameter is greater than the diameter of the rod of the tube in order to define a radial clearance which prevents mechanical contact between the cap and the rod during operation of the shock absorber, the cap having a circular housing (17b) around its central opening in order to receive a part of the seal sandwiched between the cap and the guiding disc.

2. Device according to Claim 1, characterized in that the guiding disc (18) has an annular groove (23) on at least one of the sides, the perforations (24) emerging in the bottom of the annular groove.

3. Device according to Claim 2, characterized in that the annular groove (23) in the guiding disc (18) has a cross-section which is approximately trapezoidal or in the form of a V which flares outwards.

4. Device according to Claim 2 or 3, characterized in that the inner annular surface (18c) of the guiding disc is set back axially with respect to the outer annular surface (18b) of the disc.

5. Device according to Claim 1, characterized in that the seal (10) has an annular groove (10d) axially opposite the perforations (24) in the guiding disc.

6. Device according to Claim 1, characterized in that the guiding disc (18) has at least one side (18e) which is conical towards the inside and oriented so as to face the seal (10).

7. Device according to one of the preceding claims, characterized in that the guiding disc (18) has two identical sides.

8. Device according to one of the preceding claims, characterized in that the seal (10) is made as a single component made of elastomer.

9. Device according to one of Claims 1 to 7, characterized in that the seal (10) consists of a static part (10a) in the form of a washer, which seals between the cap (17) and the inner wall of the shock-absorber tube (1), and of a dynamic part (10b) centred with respect to the static part and sealing between the cap and the rod (8) of the piston.

10. Device according to one of the preceding claims, characterized in that the diameter of the central opening (18a) in the guiding disc is greater than the diameter of the rod by a few hundredths of a millimetre to one tenth of a millimetre.

11. Device according to one of the preceding claims, characterized in that the diameter of the central opening (17a) in the cap is greater than the diameter of the rod by a few tenths of a millimetre.

12. Device according to one of the preceding claims, characterized in that the guiding disc (18) has a central bore in which a tubular guiding bush (18d) is mounted.

13. Device according to one of the preceding claims, characterized in that it furthermore comprises wiping means (25) which protect the radial clearance between the cap and the rod from the outside environment.
